# EUROPÄISCHE PATENTANMELDUNG

(11) **EP 1 314 705 A2**
(43) Veröffentlichungstag der Anmeldung: **28.05.2003**
(21) Anmeldenummer: 02025993.3
(22) Anmeldetag: 21.11.2002
(51) Int. Cl.: C04B 18/24, E04B 1/74

(54) **Schall- und Wärmedämmaterial und Verfahren zu seiner Herstellung**

(30) Priorität: 22.11.2001 DE 10157149
(71) Anmelder: Mitteldeutsche Hanfgesellschaft Sachsen-Anhalt e.V., 06886 Luth. Wittenberg (DE)
(72) Erfinder: Wächter, Werner, 06886 Luth. Wittenberg (DE)
(74) Vertreter: Schuster, Gregor, Dipl.-Ing.

(57) **Zusammenfassung**

Die Erfindung geht aus von einem Schall- und Wärmedämmmaterial auf der Basis der Hanfpflanze sowie einem Verfahren zu seiner Herstellung sowohl als Grundmaterial als auch einer Vielzahl von Finalprodukten.

Erfindungsgemäß besteht das Schall- und Wärmedämmmaterial aus einem Gemisch der Bestandteile der getrockneten Hanfpflanze, wobei der Anteil mindestens eines der Bestandteile von zuvor aufgeschlossenem Hanfstroh in dem Schall- und Wärmedämmmaterial mindestens 40 Masse-% beträgt und der Anteil von nicht aus dem Hanfstroh gewonnenen Bestandteilen der Pflanze nicht mehr als 15 Masse-% beträgt. Die Bestandteile werden im getrockneten Zustand im Kreuzlegeverfahren wieder zusammengeführt und anschließend unter Anwendung von Druck und/oder Wärme kalibriert. Je nach Rezeptur und Technologie ist das Schall- und Wärmedämmmaterial als Schüttmaterial, Vlies, eigenstabile Dämmplatte bis hin zur formstabilen Hanfformplatte herstellbar.

## Beschreibung

### Stand der Technik

Die Erfindung geht aus von einem Schall- und Wärmedämmmaterial auf der Basis der Hanfpflanze sowie einem Verfahren zu seiner Herstellung sowohl als Grundmaterial als auch einer Vielzahl von Finalprodukten.

Die Wiederentdeckung der Naturfaser Hanf hat in der zweiten Hälfte der neunziger Jahre zu einer Reihe von Vorschlägen zu einer erweiterten, über die reine Hanffaser (z. B. DE U1 296 10 689, DE U1 296 20 751) hinausgehende Verwertung der Hanfpflanze geführt, wobei die Hauptanwendung die Schall- und Wärmedämmung im Trockenbau betrifft. Hierzu muss das Grundmaterial über ausreichend Hohlräume und, im Fall der Anwendung als eigenstabile Platte, über eine bestimmte Festigkeit verfügen. So ist in der DE 197 18 352 A1 ein Verfahren zur Herstellung von Platten oder profilierten Werkstücken aus Einjahrespflanzen, beispielsweise Hanf, bekannt, bei dem die ganzen Pflanzen zerkleinert, beleimt und anschließend verpresst werden, wobei die Pflanzenteile nach der Ernte ohne Trocknung zu Ballen gepresst und die Ballen mit einer flüssigkeitsdichten dampfdurchlässigen Folie vollständig umhüllt, die umhüllten Ballen bis zur Verarbeitung gelagert und die Pflanzenteile ohne zusätzliche Trocknung weiterverarbeitet werden. Die daraus gefertigten Platten sind sicher sehr stabil, jedoch aufgrund ihrer hohen Restfeuchte nicht als Schall- und Wärmedämmmaterial geeignet. Außerdem ist die Herstellung insofern aufwändig, als die Pflanzenteile beleimt werden müssen.

In der DE 198 31 659 A1 ist ein Baumaterial zum Dämmen, vollständig bestehend aus nachwachsenden Rohstoffen, nämlich zu etwa gleichen Anteilen C4-Gras und Hanf, beschrieben. Nach dem hier ebenfalls beschriebenen Verfahren werden C4-Gras und Hanf jeweils getrennt grobzerkleinert, sechs bis zwölf Monate getrocknet und danach auf etwa 0,1 bis 4 mm feinzerkleinert. Abschließend werden die beiden Bestandteile etwa zu gleichen Anteilen zu einem Trockengemisch verarbeitet. In dieser Form kann das Baumaterial lediglich als Zuschlagstoff für Putze, Schüttungen und für vorgefertigte Bauelemente verwendet werden. Soll es als eigenstabile Dämmplatte verwendet werden, muss das Gemisch zusätzlich mit einem Verfestiger, beispielsweise Latex, mit einem Bindemittel, beispielsweise Zellulose, und einem hohen Anteil von Wasser versetzt werden. Das hierzu praktizierte Verfahren ist sehr aufwändig. Zunächst muss das Bindemittel ca. 12 Stunden in Wasser quellen. Das Quellgut wird anschließend mit dem Verfestiger zu einem Feuchtgemisch verarbeitet. Im nächsten Schritt werden das Feuchtgemisch und das Trockengemisch unter ständigem Rühren gemischt und das Fertiggemisch nach einer weiteren Quellzeit von zwölf Stunden zur Dämmplatte gepresst. Die Dämmplatte muss vor ihrer weiteren Verwendung ca. 18 Tage trocknen.

Ökonomisch günstiger gestaltet sich die Herstellung einer Dämmstoffmatte für den Hochbau unter Verwendung von Fasern und Schäben der Hanfpflanze gemäß der DE 198 46 704 A1. Hierbei wird die Hanfpflanze geerntet und direkt als Grünfaser aufgeschlossen, wobei ein Gemisch aus Langfaser, Kurzfaser und Schäben erzeugt wird, die z. T. noch miteinander verklebt sind und eine Wirrlage bilden, so dass dieses Material aus der Aufschlusseinrichtung, das eine hohe Rückstellfähigkeit aufweist, direkt als Matte mit vorbestimmter Stärke und Breite dienen kann. Zur Vermeidung von Konvektionsverlusten durch einen wärmeleitenden Luftaustausch muss diese Matte beidseitig kaschiert werden. Abgesehen davon, dass dies mit einem zusätzlichen Aufwand verbunden ist, sind derartige Kaschierungen, beispielsweise beschichtete oder getränkte Spezialpapiere, teuer. Weitere Nachteile sind in dieser Verfahrensweise der grünen Verarbeitung der Hanfpflanze begründet. Trotz der Kaschierung mit einer Dampfbremse, die übrigens in der Fachwelt nicht unumstritten ist, wird die Hanfplatte im Laufe der Zeit austrocknen, was mit einer Volumenschrumpfung und u. U. auch mit einem Verziehen der Platte verbunden ist. Damit verlieren diese Platten ihre Form und Maßhaltigkeit, wodurch Kältebrücken entstehen. Diese Nachteile machen die Dämmstoffmatte auch für die ohnehin schon auf den Hochbau eingeschränkte Verwendung quasi unbrauchbar.

Für eine Anwendung u. a. im Kraftfahrzeuginnen- und Karosseriebereich wird in der DE 199 54 779 A1 ein mehrlagiges Vliesund Folienverbundsystem als Schallschutzmedium vorgeschlagen. Es besteht aus hydrophobisierten Hanffasern mit einer hydrophoben Schicht, die auch wiederum aus Hanffasern bestehen kann. Abgesehen davon, dass hier auch wieder nur die Hanffaser zum Einsatz kommt, besteht der Nachteil dieser Lösung wie auch schon bei der zuvor genannten Lösung in der Notwendigkeit eine Kaschierung. Auch wenn es inzwischen möglich ist, native Folien einzusetzen, erfordert sowohl die Folienherstellung als auch die Kaschierung einen zusätzlichen Aufwand.

### Die Erfindung und ihre Vorteile

Das erfindungsgemäße Schall- und Wärmedämmmaterial mit den kennzeichnenden Merkmalen des Patentanspruches 1 hat demgegenüber den Vorteil, dass es bei Verwendung aller Bestandteile der Hanfpflanze und unabhängig von der Rezeptur auch ohne Kaschierung in sich schon so stabil ist, dass es als Vliesstoff, flexible Bahnware, Dämmplatte oder auch als Hanfformplatte einsetzbar ist. Aufgrund dessen, dass die Bestandteile der Hanfpflanze im getrockneten Zustand verarbeitet werden, besitzt das lediglich nach den Hauptarbeitsstufen des Patentanspruches 12, d. h. ohne zusätzliche die Festigkeit steigernde Maßnahmen, hergestellte Schallund Wärmedämmmaterial darüber hinaus eine konstante Maßhaltigkeit, Formstabilität und ein hohes Schall- und Wärmeisolationsvermögen.

Nach einer vorteilhaften Ausgestaltung der Erfindung besteht das Schall- und Wärmedämmmaterial aus einer Mischung von 20 bis 60 Masse-% zerkleinertem Hanfstroh und 40 bis 80 Masse-% Schäben aus zuvor aufgeschlossenem Hanfstroh. Eine vorteilhafte Länge des Hanfstrohs liegt dabei zwischen 10 und 100 mm.

Bei allen weiteren Rezepturen werden Hanffasern und Schäben nur noch aus zuvor aufgeschlossenem Hanfstroh verwendet. Zur Gewährleistung einer guten Eigenstabilität des Materials sollten die Hanffasern hier jedoch zwischen 100 und 500 mm lang sein. Die optimale Länge der Schäben liegt zwischen 5 und 40 mm. So besteht eine vorteilhaften Mischung des Schall- und Wärmedämmmaterials aus 10 bis 60 Masse-% Hanffasern und 40 bis 90 Masse-% Schäben.

Nach einer weiteren vorteilhaften Ausgestaltung der Erfindung sind dem Gemisch auch noch Hanfkörner zugesetzt. Dabei setzt sich die Mischung aus folgenden Bestandteilen zusammen:
2 bis 10 Masse-% Hanfkörnern,
20 bis 50 Masse-% Hanffasern und
40 bis 70 Masse-% Schäben.

Obwohl das Schall- und Wärmedämmmaterial bereits eine gute Eigenstabilität besitzt, ist es möglich, für besondere Anwendungsfälle seine Festigkeit durch Stützfasern zu erhöhen. Eine diesbezügliche Rezeptur enthält folgende Bestandteile:
2 bis 5 Masse-% Hanfkömern,
20 bis 50 Masse-% Hanffasem
40 bis 70 Masse-% Schäben und
bis zu 5 Masse-% Stützfasern.

Nach einer weiteren vorteilhaften Ausgestaltung können zur Erhöhung der Festigkeit lediglich die Stützfasern zusätzlich vorgesehen werden, wobei sich das Gemisch dann aus
20 bis 60 Masse-% Hanffasern
35 bis 70 Masse-% Schäben und
bis zu 15 Masse-% Stützfasern zusammensetzt.

Hinsichtlich der biologischen Abbaubarkeit der Schall- und Wärmedämmplatte ist es vorteilhaft, als Stützfasern auch nätive Stoffe, beispielsweise aufgeschlossene Naturfasern oder auch native thermoplastische Kunststoffe zu verwenden.

Selbstverständlich können allen Gemischen auch, hydrophobierende und/oder brandhemmende Zusatzstoffe zugesetzt werden.

Die beschriebenen Vorteile der Erfindung sind neben den erfindungsgemäßen Rezepturen auch durch das Verfahren zur Herstellung des Schall- und Wärmedämmmaterials gemäß Patentanspruch 12 bedingt. Die hohe Eigenstabilität wird dabei durch die Verarbeitung der Hanffasern im Kreuzlegeverfahren erreicht. Bei diesem Verfahren werden die Hanffasern verlängert und in mehreren Lagen immer über Kreuz zur Kalibrierung vorbereitet. Die sich kreuzweise gegenseitig verhakenden Hanffasern bilden für die übrigen Bestandteile des jeweiligen Gemisches ein Grundgerüst, in das sich die kürzeren Bestandteile des Gemisches, wie Schäben, Hanfkörner oder Stützfasern einlagern bzw. festhaken. Die im Vergleich zu den Hanffasern wesentlich kürzeren Schäben geben dem Material eine gewisse Druckstabilität und gewährleisten dadurch auch bereits bei nicht weiterer mechanischer oder thermischer Behandlung eine bestimmte Grundfestigkeit.

Nach einer vorteilhaften Ausgestaltung des Verfahrens besteht die Kalibrierung in einer mechanischen und oder thermischen Behandlung des kreuzweise gelegten Gemenges zu einem flexiblen Mattenmaterial mit höherer Eigensteifigkeit. Eigensteife Hanfbauplatten sowie selbsttragende Hanfformplatten werden bei Temperaturen von 80 bis 120 °C sowie einer weiteren mechanischen Verfestigung, beispielsweise mittels einer Presse, hergestellt. Vorteilhaft ist, wenn der Verfestigung ein Befeuchten des Materials vorausgeht.

Bei so hergestelltem Schall- und Wärmedämmmaterial kann grundsätzlich auf materialfremde Stützfasern verzichtet werden. Trotzdem ist es auch mit diesem Verfahren möglich, das Schall- und Wärmedämmmaterial mit Stützfasern zu versehen, wobei bei einer thermischen Behandlung das an sich bekannte Versintern der Stützfasern eine weitere Erhöhung der Festigkeit, Steifigkeit und Formbeständigkeit zur Folge hat.

Zur Erzielung eines verbesserten Brandverhaltens können dem Schallund Wärmedämmmaterial während oder auch nach seiner Herstellung brandhemmende Stoffe zugesetzt werden.

Ebenso ist es möglich, andere bekannte Verfahren zur Erhöhung der Stabilität, wie z. B. Nadeln, Steppen, Nieten u. a., anzuwenden.

Das erfindungsgemäß hergestellte Schall- und Wärmedämmmaterial kann selbstverständlich in jeder Form an seinen Außenflächen mit Kaschierungen versehen werden. Hierbei können sowohl alle für Kaschierungen üblichen Werkstoffe verwendet als auch sämtliche bekannten Fügeverfahren zum Verbinden der Kaschierung mit dem Schall- und Wärmedämmmaterial angewendet werden.

Das zusätzlich mechanisch und/oder thermisch verfestigte, als eigenstabile Platten vorliegende Schall- und Wärmedämmmaterial kann auch in Feuchtbereichen, wie Kellern, Sanitäreinrichtungen und zur Wärmedämmung im Außenbereich eingesetzt werden.

Weitere Vorteile und vorteilhafte Ausgestaltungen der Erfindung sind den nachfolgenden Beispielbeschreibungen und den Ansprüchen entnehmbar.

Nachfolgend wird die Erfindung anhand einiger Anwendungsbeispiele verschiedener Rezepturen sowie der zugehörigen Verfahrensschritte näher beschrieben.

### Rezeptur 1:

Aus getrockneten Hanfpflanzen werden mittels bekannter Technik zunächst die Hanfkörner gewonnen, so dass das Hanfstroh zurückbleibt. Etwa 60 % des Hanfstrohs werden anschließend mittels üblicher Aufschlusstechnik in Hanffasern und Schäben getrennt. Die Hanffasern werden dabei in einer mittleren Länge von 130 mm und die Schäben mit einer mittleren Länge von 25 mm gewonnen. Etwa 40 % des anfallenden Hanfstrohs werden in einem Häcksler so zerkleinert, dass die mittlere Länge der Hanfstrohabschnitte etwa 40 mm beträgt. Danach wird ein Gemisch von 35 Masse-% des gehäckselten Hanfstrohs und 65 Masse-% der bei Aufschluss des Hanfstrohs gewonnenen Schäben hergestellt. Dieses Gemisch wird anschließend mit geringen Mengen von brandhemmenden Zusatzstoffen, beispielsweise 3 bis 5 % Sodar, versetzt und unmittelbar als Schüttgut für die Schall- und Wärmedämmung zwischen den Sparren einer Dachkonstruktion eingesetzt.

### Rezeptur 2:

(Hier muss ein Beispiel ohne Stützfaser und Körner beschrieben werden, nach der Rezeptur des alten PA 3 bzw. neuen PA 4)

### Rezeptur 3:

Eine in der Kraftfahrzeugindustrie einsetzbare selbsttragende gepresste Hanfformplatte besteht aus 50 Masse-% Hanffaser, 35 Masse-% Schäben und 15 Masse-% Stützfaser. Die Platte wird in einer Abmessung von 1000 x 1000 x (5 und 8) mm angeboten. Die Kalibrierung erfolgt durch einen zusätzlichen Pressvorgang.

### Rezeptur 4:

Das aus 20 Masse-% Hanffasern, 70 Masse-% Schäben, 5 Masse-% Hanfkörnern und 5 Masse-% Stützfasern bestehende Gemisch kann als ein Hanfvlies zur Unterfütterung von Bodenbelägen aller Art zur Trittschalldämmung eingesetzt werden. Es wird überwiegend als Rollen geliefert. Die gleiche Rezeptur kann mit einer zusätzlichen mechanischen Verfestigung bei der Herstellung als Leichtbauplatte mit einer Dicke von 4 bis 10 mm geliefert werden. Wird dieses Hanfvlies zusätzlich noch genadelt, können derartige Matten zur Herstellung von Naturmatratzen oder zur Polsterung von Möbeln verwendet werden. Für eine kurzzeitige Verwendung, beispielsweise auf Messen, kann das Hanfvlies auch als recycelbarer Einweg-Fußbodenbelag verwendet werden, sofern die Stützfasern ebenfalls aus nativen Rohstoffen hergestellt werden.

### Rezeptur 5:

Erhöht man gegenüber dem Hanfvlies gemäß Ausführungsbeispiel 4 den Anteil der Hanffaser auf 50 Masse-% und reduziert gleichzeitig den Anteil der Schäben um den gleichen Betrag, erhält man eine eigenstabile Dämmplatte für den Außenbereich.

### Rezeptur 6:

Eine bevorzugte Anwendung im Nassbereich bietet eine Hanfbauplatte für den anspruchsvollen Einsatz mit den gleichen Anteilen an Hanffasern und Schäben wie in Ausführungsbeispiel 5, jedoch ohne Verwendung von zusätzlichen Stützfasern, dafür aber mit einem doppelt so hohen Anteil von Hanfkörnern.

### Rezeptur 7:

Durch eine Substitution des Anteils der Hanfkörner aus Rezeptur 6 durch Stützfasern kann das Schall- und Wärmedämmmaterial als Faserverbundmatte zur Herstellung von Formpressteilen im Fahrzeugund Heizungsbau eingesetzt werden.

### Rezeptur 8:

Reduziert man den Anteil der Hanffaser auf 20 Masse-% zugunsten der Schäben (70 Masse-%) unter Beibehaltung der Anteils der Hanfkörner von 10 Masse-%, kann dieses Produkt als Schüttdämmung, Zuschlagstoff für Farben und Putze und Geotextilien eingesetzt werden. Die Verwendung als Geotextilie erschließt eine breite Anwendung im Deponie-, Landschafts-, Wasser- und Straßenbau sowie bei der Rekultivierung von Tagebauen.

### Rezeptur 9:

Ein Hanfdämmvlies der Spitzenklasse besteht aus 60 Masse-% Hanffasern, 30 Masse-% Schäben und 10 Masse-% Stützfasern. Dieses Vlies ist für die Dämmung im Wand- und Dachbereich sowie in der Fahrzeugindustrie einsetzbar. Seine Rohdichte beträgt 30 bis 35 kg/m³.

Diese Ausführungsbeispiele haben zum einen die Vielfalt der Anwendung und zum andern die unkomplizierte Variation der Eigenschaften des erfindungsgemäßen Schall- und Wärmedämmmaterials durch gezielte Veränderung der Rezeptur aufgezeigt.

Alle in der Beschreibung und den nachfolgenden Ansprüchen dargestellten Merkmale können sowohl einzeln als auch in beliebiger Kombination miteinander erfindungswesentlich sein.

## Patentansprüche

1. Schall- und Wärmedämmmaterial auf der Basis der Hanfpflanze,
**dadurch gekennzeichnet,**
**dass** es aus einem Gemisch der Bestandteile der getrockneten Hanfpflanze besteht, wobei der Anteil mindestens eines der Bestandteile von zuvor aufgeschlossenem Hanfstroh in dem Schallund Wärmedämmmaterial mindestens 40 Masse-% beträgt und der Anteil von nicht aus dem Hanfstroh gewonnenen Bestandteilen der Pflanze nicht mehr als 15 Masse-% beträgt.

2. Schall- und Wärmedämmmaterial nach Anspruch 1,
**dadurch gekennzeichnet,**
**dass** sich das Gemisch zusammensetzt aus
20 bis 60 Masse-% zerkleinertem Hanfstroh und
40 bis 80 Masse-% Schäben aus zuvor aufgeschlossenem Hanfstroh.

3. Schall- und Wärmedämmmaterial nach Anspruch 1 und 2,
**dadurch gekennzeichnet,**
**dass** das zerkleinerte Hanfstroh eine Länge von 10 bis 100 mm besitzt.

4. Schall- und Wärmedämmmaterial nach Anspruch 1
**dadurch gekennzeichnet, dass** sich das Gemisch zusammensetzt aus
10 bis 60 Masse-% Hanffasern und
40 bis 90 Masse-% Schäben aus zuvor aufgeschlossenem Hanfstroh.

5. Schall- und Wärmedämmmaterial nach Anspruch 1,
**dadurch gekennzeichnet, dass** sich das Gemisch zusammensetzt aus
2 bis 10 Masse-% Hanfkörnern,
20 bis 50 Masse-% Hanffasern und
40 bis 70 Masse-% Schäben.

6. Schall- und Wärmedämmmaterial nach Anspruch 1,
**dadurch gekennzeichnet,**
**dass** sich das Gemisch zusammensetzt aus
2 bis 5 Masse-% Hanfkörnern,
20 bis 50 Masse-% Hanffasern
40 bis 75 Masse-% Schäben und
bis zu 5 Masse-% Stützfasern.

7. Schall- und Wärmedämmmaterial nach Anspruch 1,
**dadurch gekennzeichnet,**
**dass** sich das Gemisch zusammensetzt aus
20 bis 60 Masse-% Hanffasern
35 bis 70 Masse-% Schäben und
bis zu 15 Masse-% Stützfasern.

8. Schall- und Wärmedämmmaterial nach Anspruch 4 bis 7,
**dadurch gekennzeichnet,**
**dass** die Hanffasern eine Länge von 100 bis 500 mm aufweisen.

9. Schall- und Wärmedämmmaterial nach Anspruch 2 und 4 bis 7,
**dadurch gekennzeichnet,**
**dass** die Schäben eine Länge von 5 bis 40 mm aufweisen.

10. Schall- und Wärmedämmmaterial nach Anspruch 6 bis 9,
**dadurch gekennzeichnet,**
**dass** die Stützfasern aus einem nativen thermoplastischen Kunststoff und/oder aufgeschlossenen Naturfasern bestehen.

11. Schall- und Wärmedämmmaterial nach Anspruch 1 bis 10,
**dadurch gekennzeichnet,**
**dass** es als Schüttdämmung, als Vliesstoff, als flexible Bahnware oder als eigensteife Dämmplatte ausgebildet ist.

12. Verfahren zur Herstellung eines Schall- und Wärmedämmmaterials, insbesondere nach einem der Ansprüche 1 bis 11,
**dadurch gekennzeichnet,**
**dass** die Hanfpflanze
- getrocknet,
- in Hanfstroh und Hanfkörner getrennt,
- ein Teil des Hanfstrohs zerkleinert,
- der andere Teil des Hanfstrohs aufgeschlossen, d. h. in Fasern und Schäben getrennt wird
- die gewonnenen Bestandteile der Hanfpflanze anwendungsbezogen und je nach Rezeptur in kreuzweisen Lagen wieder miteinander verbunden werden und schließlich
- das entstandene Gemenge anwendungsspezifisch kalibriert wird.

13. Verfahren nach Anspruch 12,
**dadurch gekennzeichnet,**
**dass** das entstandene Gemisch mittels mechanischer und/oder thermischer Behandlung zu einem formstabilen flexiblen Mattenmaterial kalibriert wird.

14. Verfahren nach Anspruch 12 und 13,
**dadurch gekennzeichnet,**
**dass** das kalibrierte flexible Mattenmaterial bei einer Temperatur von 80 bis 120 °C einer weiteren mechanischen Verfestigung unterzogen wird.

15. Verfahren nach Anspruch 13 und 14,
**dadurch gekennzeichnet,**
**dass** vor der mechanischen Behandlung das Material befeuchtet wird.
